# EUROPÄISCHE PATENTANMELDUNG

(11) **EP 2 865 781 A1**
(43) Veröffentlichungstag der Anmeldung: **29.04.2015**
(21) Anmeldenummer: 13189688.8
(22) Anmeldetag: 22.10.2013
(51) Int. Cl.: C23C 4/10, C23C 4/12, C23C 28/04, C23C 28/00

(54) **Zweilagige keramische Schicht mit unterschiedlichen Mikrostrukturen**

(71) Anmelder: Siemens Aktiengesellschaft, 80333 München (DE)
(72) Erfinder: Die Erfindernennung liegt noch nicht vor

(57) **Zusammenfassung**

Durch die Verwendung einer zweilagigen keramischen Wärmedämmschicht mit einer rissfreien hochporösen unteren Lage und einer äußersten Wärmedämmschichtlage mit vertikalen Rissen wird sowohl eine hohe Wärmedämmung und eine hohe Erosionsbeständigkeit gewährleistet.

## Beschreibung

Die Erfindung betrifft eine keramische Schicht, die eine Zweilagigkeit aufweist, wobei in den Lagen unterschiedliche Mikrostrukturen vorhanden sind.

Keramische Schichten werden insbesondere bei Turbinenschaufeln als Wärmedämmschichten eingesetzt und weisen eine Porosität auf.

Ebenso bekannt sind vertikal segmentierte Wärmedämmschichten, bei denen Risse beim Beschichten durch eine nachträgliche Behandlung entstehen.

Es besteht jedoch das Problem, dass bei Erhöhung der Porosität zur Erzielung einer höheren Wärmedämmung die Erosionsbeständigkeit einer Wärmedämmschicht, die in der Regel plasmagespritzt ist, sich reduziert.

Es ist daher Aufgabe der Erfindung oben genanntes Problem zu lösen.

Die Aufgabe wird gelöst durch ein Wärmedämmschichtsystem gemäß Anspruch 1.

In den Unteransprüchen sind weitere vorteilhafte Maßnahmen aufgelistet, die beliebig miteinander kombiniert werden können, um weitere Vorteile zu erzielen.

Die Vorteile liegen bei einer guten Wärmedämmung und guten Erosionsbeständigkeit.

Es zeigen:
- Figur 1 - 4: Ausführungsbeispiele der Erfindung,
- Figur 5: eine Liste von Superlegierungen und
- Figur 6: eine Turbinenschaufel.

Die Beschreibung und die Figuren stellen nur Ausführungsbeispiele der Erfindung dar.

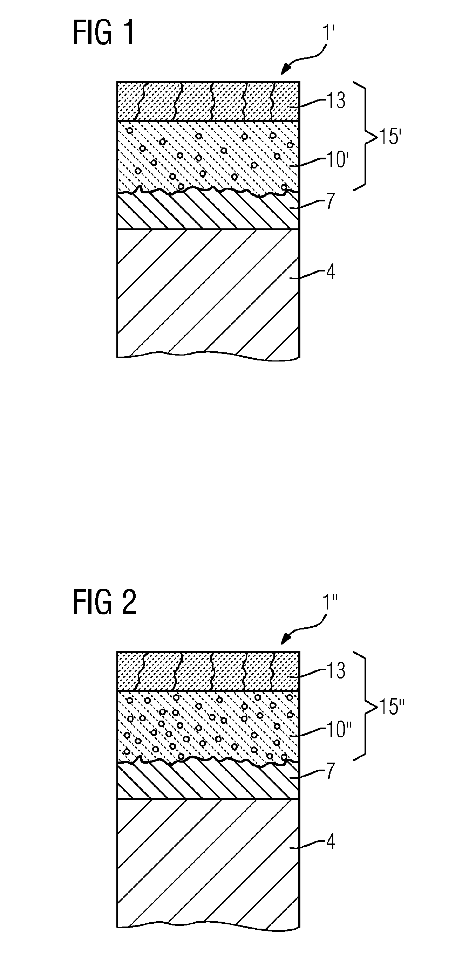

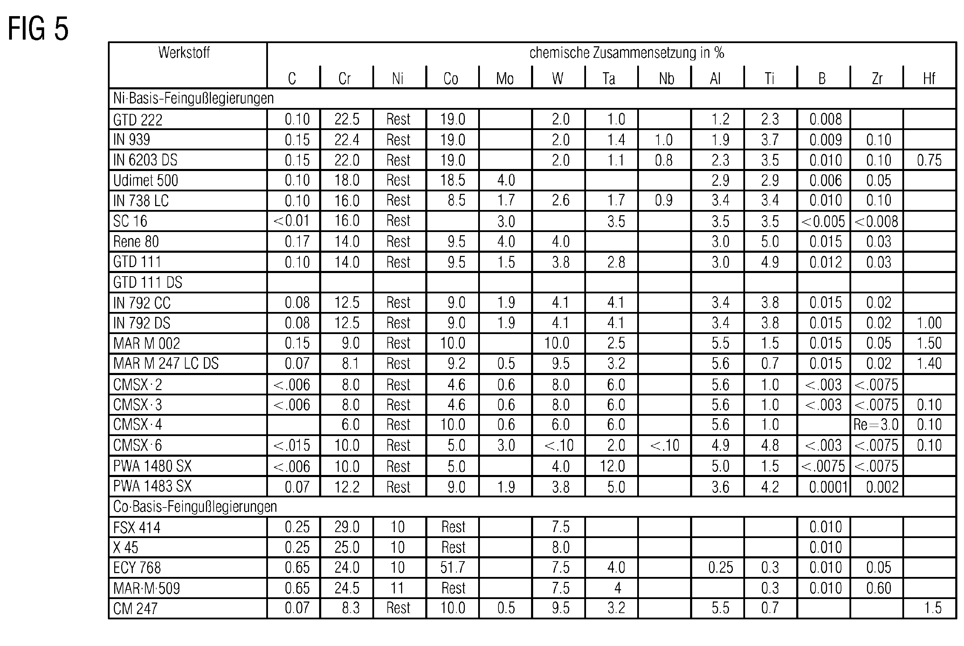

In Figur 1 und in den Figuren 2 bis 4 ist jeweils ein Schichtsystem 1`, 1``, ... dargestellt, das zumindest ein metallisches Substrat 4 aufweist.
Das metallische Substrat 4 weist insbesondere eine kobalt- oder nickelbasierte Superlegierung, insbesondere gemäß Figur 5 auf.

Auf dem Substrat 4 (Fig. 1 - 4) ist vorzugsweise eine metallische Haftvermittlerschicht 7 aufgebracht, ganz insbesondere direkt auf dem Substrat 4.
Diese metallische Haftvermittlerschicht 7 weist vorzugsweise eine Legierung des Typs NiCoCrAl(X) auf, auf deren Oberfläche sich bei der weiteren Beschichtung oder im Betrieb (TGO) eine schützende Aluminiumoxidschicht bildet (nicht dargestellt).

Auf dem Substrat 4 oder der metallischen Haftvermittlerschicht 7 wird eine untere keramische Schicht 10` (Fig. 1) einer zweilagigen, äußersten keramischen Wärmedämmschicht 15` aufgebracht.

Die Porosität wird vorzugsweise in vol% angegeben.

Vorzugsweise wird dabei für die untere keramische Schicht 10` gemäß Figur 1 ein APS-Verfahren verwendet und die untere keramische Schicht 10` der zweilagigen, äußersten keramischen Wärmedämmschicht 15` weist eine Porosität von (12 +/-4)% auf.

Die untere keramische Schicht 10` weist vorzugsweise eine Schichtdicke bis zu 1mm auf.
Die Mindestdicke der unteren keramischen Schicht 10` liegt bei mindestens 100 µm, ganz insbesondere bei mindestens 150 µm (Fig. 1 - 4).
Die äußerste, keramische Schicht 13 weist in den Figuren 1 bis 4 eine im Vergleich zur unteren Schicht 10`, ..., 10^{IV} der zweilagigen keramischen Wärmedämmschichten 15`, 15``, ... dichte Schicht auf, die vertikal mit Rissen durchsetzt ist, d.h. die Porosität liegt vorzugsweise bei < 8%.
Die Mindestschichtdicke der äußersten keramischen Schicht 13 beträgt 30µm, insbesondere mindestens 50µm (Fig. 1 - 4).
Die Maximalschichtdicke der äußersten keramischen Schicht 13 beträgt maximal 500µm, insbesondere maximal 300 µm (Fig. 1 - 4).

Die Porosität der segmentierten Schichten wie hier der äußersten keramischen Schicht 13 entspricht dem aus dem Stand der Technik.

In Figur 2 ist ein weiteres Ausführungsbeispiel mit einem Schichtsystem 1`` gezeigt.
Im Gegensatz zur Figur 1 weist die untere Lage 10`` der keramischen Wärmedämmschicht 15`` eine Porosität von (15 +/- 4)% auf.

Ebenso vorzugsweise kann die untere keramische Schicht 10`` in Figur 2 eine Schichtdicke von bis zu 1,5mm aufweisen, insbesondere >1mm bis 1,5mm und dann eine Porosität von (20 +/-5)% aufweisen.
Die Mindestschichtdicke der äußersten, keramischen Schicht 13 beträgt 30µm, insbesondere mindestens 50µm.

Ebenso vorzugsweise kann die Porosität der unteren keramische Schicht 10`` in Figur 2 noch weiter erhöht werden auf (25 +/-5)% und dabei werden vorzugsweise Schichtdicken > 1,5mm erzeugt.

Die Mindestschichtdicke der äußersten, keramischen Schicht 13 beträgt 30µm, insbesondere mindestens 50µm.

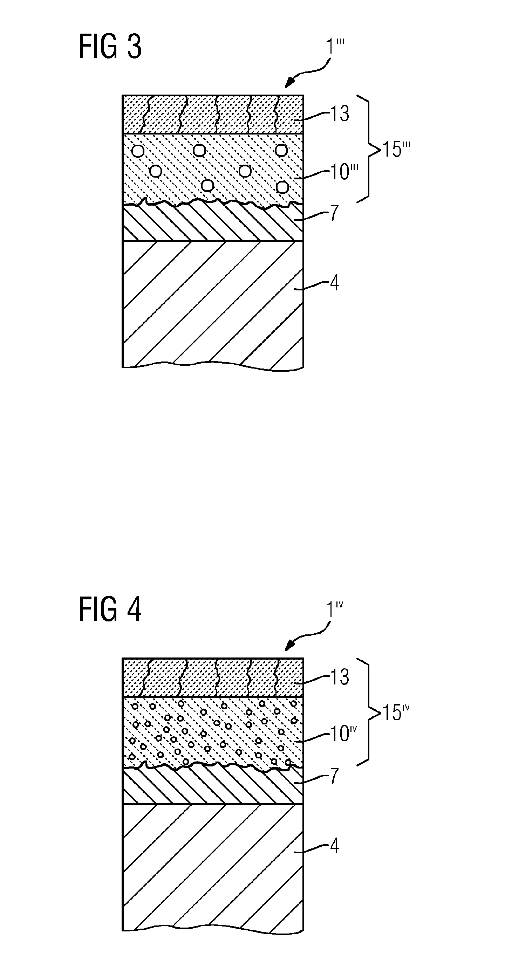

Figur 3 zeigt ein weiteres Ausführungsbeispiel eines erfindungsgemäßen Schichtsystems 1```.

Die untere keramische Schicht 10``` der Wärmedämmschicht 15``` weist eine Porosität von vorzugsweise größer 15% auf und wurde durch ein APS-Verfahren hergestellt. Dabei sind jedoch die Poren durch Verspritzen eines keramischen Pulvers vorzugsweise mittels Polymeren hergestellt worden.
Dies ergibt eine charakteristische Mikrostruktur der Poren.

Die untere keramische Schicht 10``` kann vorzugsweise eine Schichtdicke von mehreren Millimetern aufweisen, insbesondere ≥ 2mm.
Die Mindestschichtdicke der äußersten, keramischen Schicht 13 beträgt 30µm, insbesondere mindestens 50µm.

In Figur 4 ist ein weiteres erfindungsgemäßes Schichtsystem 1^{IV} dargestellt.
Die untere keramische Schicht 10^{IV} der zweilagigen, keramischen Wärmedämmschicht 15^{IV} ist durch das Suspensionsplasmaspraying-Verfahren (SPS) hergestellt und weist eine duktile Stängelstruktur mit einer gewissen Porosität auf, die bei 4% liegt und mit Rissen bis < 8%.

Die äußerste Schicht 13 in Figur 4 ist entsprechend der Mindestschichtdicke und Struktur und maximalen Schichtdicke in den Figuren 1 - 3 ausgebildet.

Als Materialien für die äußersten, keramischen Wärmedämmschichten 15`, ... 15^{IV} kommen Yttriumoxid, teilstabilisiertes Zirkonoxid oder Wärmedämmschichten aus vollstabilisierten Zirkonoxid in Frage.

Ebenso ist es möglich Pyrochlore wie Gadoliniumzirkonat, Gadoliniumhafnat, Lanthanzirkonat, Gadolinumzirkonat zu verwenden.
Dabei können je nach Einsatzbedingungen und Herstellungsmöglichkeiten die Materialien für die untere, keramische Schicht 10`, 10``, ... und äußerste Schicht 13 variiert werden.

Die zweilagige äußerste keramische Schicht 15 ist vorzugsweise die äußerste Schicht des Schichtsystems 1`, 1``, ....

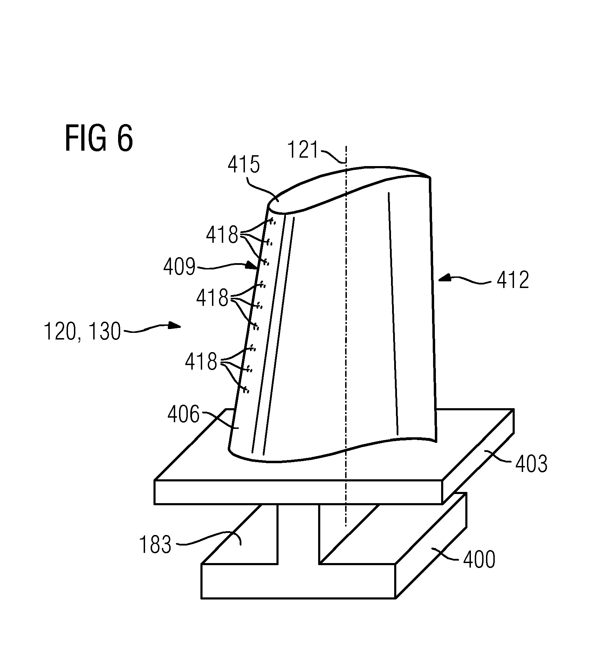

Die Figur 6 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichtemachen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10A1-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Schichtsystem (1`, 1``, 1```, 1^{IV})
mit einer zweilagigen, äußersten keramischen Schicht (15`, 15``, ...),
die eine untere keramische Schicht (10`, 10``, ...) und eine äußerste keramische Schicht (13) aufweist,
wobei die untere keramische Schicht (10`, 10``, ...) eine Porosität von mindestens 5%,
insbesondere von mindestens 8%,
ganz insbesondere von mindestens 10%,
aufweist und
kaum oder keine vertikale Risse,
insbesondere keine durchgehende vertikalen Risse, aufweist,
wobei die äußerste keramische Schicht (13) eine Schichtdicke von höchstens 40%,
insbesondere von höchstens 20%,
ganz insbesondere von höchstens 10% der Schichtdicke der unteren keramischen Schicht (10`,10``, ...) aufweist.

2. Schichtsystem nach Anspruch 1,
bei dem die äußerste keramische Schicht (13) eine Mindestschichtdicke von 30µm,
insbesondere von 40µm,
ganz insbesondere von 50µm,
aufweist.

3. Schichtsystem nach einem oder beiden der Ansprüche 1 oder 2,
bei dem die äußerste keramische Schicht (13) eine maximale Schichtdicke von 500µm, insbesondere von 300µm aufweist.

4. Schichtsystem nach einem oder mehreren der Ansprüche 1, 2 oder 3,
bei dem die untere keramische Schicht (10`) der zweilagigen keramischen Schicht (15`) eine Porosität von (12 +/- 4)% aufweist und
insbesondere eine Schichtdicke bis zu 1mm aufweist.

5. Schichtsystem nach einem oder mehreren der vorherigen Ansprüche 1 bis 3,
bei dem die untere keramische Schicht (10``) der zweilagigen keramischen Schicht (15``) eine Porosität von (15 +/-4)% aufweist und
insbesondere eine Schichtdicke bis zu 1mm aufweist.

6. Schichtsystem nach einem oder mehreren der vorherigen Ansprüche 1 bis 3,
bei dem die untere keramische Schicht (10``) der zweilagigen keramischen Schicht (15``) eine Porosität von (20 +/-5)% aufweist und
insbesondere eine Schichtdicke von bis zu 1,5mm, insbesondere von > 1mm bis 1,5mm aufweist.

7. Schichtsystem nach einem oder mehreren der Ansprüche 1 bis 3,
bei dem die untere keramische Schicht (10``) der keramischen Schicht (15``) eine Porosität von (25 +/- 5)% aufweist und
insbesondere eine Schichtdicke von > 1,5mm aufweist.

8. Schichtsystem nach einem oder mehreren der Ansprüche 1 bis 3,
bei dem die untere keramische Schicht (10```) eine Porosität von >15% aufweist.

9. Schichtsystem nach einem oder mehreren der Ansprüche 1 bis 3,
bei dem die untere keramische Schicht (10^{IV}) der Wärmedämmschicht (15^{IV}) eine duktile Stängelstruktur aufweist.

10. Schichtsystem nach einem oder mehreren der vorherigen Ansprüche,
bei dem die untere keramische Schicht (10`, ...) der zweilagigen keramischen Wärmedämmschicht (15`, ...) durch ein APS-Verfahren hergestellt wurde.

11. Schichtsystem nach einem oder mehreren der vorherigen Ansprüche,
bei dem die untere keramische Schicht (10`, 10``, 10```) der zweilagigen keramischen Wärmedämmschicht (15`, 15``, 15```) durch Verspritzen von keramischen Pulvern mit Polymeren hergestellt wurde.

12. Schichtsystem nach einem oder mehreren der vorherigen Ansprüche 1 bis 9,
bei dem die untere keramische Schicht (10^{IV}) der zweilagigen, keramischen Wärmedämmschicht (15^{IV}) durch Suspension-Plasma-Spraying (SPS) hergestellt wurde.

13. Schichtsystem nach einem oder mehreren der vorherigen Ansprüche,
bei dem die Materialien für die untere keramische Schicht (10`, 10``, ...) und der äußersten keramischen Schicht (13) ausgewählt wird aus: Zirkonoxid, teilstabilisiert oder vollstabilisiert, und/oder Pyrochloren.

14. Schichtsystem nach einem oder mehreren der vorherigen Ansprüche,
bei dem die zweilagige keramische Schicht (15`, 15``, ...) die die äußerste Schicht darstellt.

15. Schichtsystem nach einem oder mehreren der vorherigen Ansprüche,
bei dem die untere keramische Schicht (10`, 10``, ...) eine Mindestdicke von mindestens 100µm,
insbesondere von 150µm,
aufweist.
